# EUROPEAN PATENT SPECIFICATION

(11) **EP 3 580 032 B1**
(45) Date of publication and mention of the grant of the patent: **04.09.2024**
(21) Application number: 18709080.8
(22) Date of filing: 09.02.2018
(51) Int. Cl.: B29C 45/00, B65D 21/02, B29C 45/16

(54) **INTERNALLY HOLLOW BODY, MOLD AND METHOD THEREOF**
INNEN HOHLER KÖRPER, GUSSFORM UND VERFAHREN DAFÜR
CORPS INTÉRIEUREMENT CREUX, MOULE ET PROCÉDÉ CORRESPONDANT

(30) Priority: 10.02.2017 IT 201700015088
(43) Date of publication of application: 18.12.2019
(73) Proprietor: Poli, Fabrizio, 25073 Bovezzo (Brescia) (IT); Nenna, Umberto, 25080 Calvagese della Riviera (Brescia) (IT)
(72) Inventor: Poli, Fabrizio, 25073 Bovezzo (Brescia) (IT); Nenna, Umberto, 25080 Calvagese della Riviera (Brescia) (IT)
(74) Representative: Chimini, Francesco
(86) International application number: PCT/IB2018/050807
(87) International publication number: WO 2018/146626

(56) References cited:
- EP-A1- 1 502 723
- WO-A1-2016/092407
- FR-A1- 2 949 994
- JP-A- H11 179 754
- JP-A- S58 116 125
- US-A1- 2006 038 319
- US-A1- 2012 228 253

## Description

The present invention relates to the production of internally hollow bodies. In particular, the invention relates to a particular type of internally hollow body made of plastic, such as for example a container, the manufacturing method thereof and the related mold adapted to be used during the manufacturing method.

Plastic hollow containers made by means of rotational molding or blow molding techniques, designed to contain a plurality of liquid, solid or gaseous substances belonging to many sectors of industry (food, chemical, pharmaceutical, etc.) are known in the art. For example, included in this type of containers are those designed to contain substances that must not escape uncontrollably and which therefore must be provided with closure systems (screw caps, pressure covers, valves, etc.)

Internally hollow bodies, such as for example the aforementioned containers, and the respective known production techniques present some disadvantages.

The internally hollow bodies of the prior art produced using traditional molding techniques (rotational molding or blow molding), such as bottles, barrels, jerrycans, flasks, bins, tanks, small cisterns have the disadvantage of being difficult to make in square shapes, for example box-shaped or approximable to those of a parallelepiped with slightly rounded edges. In addition, they generally have a worse exterior finish than the aesthetic finish of products manufactured using the injection molding technique.

Moreover, blow molding does not allow the production of details with constant thickness and, consequently, products made with such technology have areas that require a greater amount of plastic material for producing the container, with a consequent greater demand for resources (financial and material). Furthermore, blow-molding technology and, in particular, rotational molding technology are less productive than other technologies, such as injection molding.

Recently, an internally hollow body made of plastic and a related production technique by injection molding were devised, both described in the patent application with publication number WO2016092407A1 in the name of the same applicants as the present patent application. The hollow body described in WO2016092407A1 is made by the union of two half-shells and the subsequent overmolding by injection of a joining element at the union region of the two half-shells. However, the hollow body and the method of production described in this patent application have some disadvantages. Internally hollow bodies may suffer accidental breakage if subjected to certain load and/or fall tests. In particular, in the event of a fall, it may happen that, as a result of the impulsive impact, one of the two half-shells will detach from the other half-shell and/or the joining element, causing a hole to open and the consequent leakage of the contents.

Moreover, the production times of the hollow bodies according to the prior art are relatively long and produce much waste, limiting the efficiency and effectiveness of production.

One of the objects of the present invention is to improve the robustness of hollow bodies made of plastic, made by molding two half-shells (a main body and a closure body) joined together.

A further object of the present invention is to improve the efficiency and effectiveness of production of such internally hollow bodies.

Such aims are achieved by an internally hollow body, by a method for producing an internally hollow body and by a mold, according to the attached independent claims. The claims dependent on these claims describe further embodiments.

The features and advantages of the present invention will be apparent from the description given below, provided by way of non-limiting example, in accordance with the accompanying figures, wherein:
- figure 1 shows an internally hollow body;
- figure 1a shows an exploded view of the internally hollow body;
- figure 2a shows a plan view from below of an internally hollow body;
- figures 2b and 2c show a detailed enlargement of an area C in figure 1, obtained from a section of the internally hollow body of figure 1 along a vertical plane K, respectively, when said plane K is in correspondence with the section plane A-A and B-B in figure 2a;
- figures 2d and 2e show a detailed enlargement of an area C in figure 1, obtained from a section of the internally hollow body of figure 1 along a vertical plane K, respectively, when such plane K is in correspondence with the section plane A-A and B-B in figure 2a;
- figure 2f shows a detailed enlargement of a vertical cross-section of the internally hollow body, when the internally hollow body is inserted between the punch and the die during an overmolding step of a joining element between a main body and a closure body of an internally hollow body;
- figure 2g shows a detailed enlargement of a section of a main body of the internally hollow body, when the main body is inserted between the punch and the die during a molding step of such main body;
- figures 3a to 3i illustrate the steps of the production method of the internally hollow body, by using an example of the mold 500;
- figures 4a to 5e show the steps of the production method of the internally hollow body by using another example of the mold 500.

In accordance with the accompanying figures, an internally hollow plastic body having an inner cavity 2, preferably adapted to contain liquid, solid or gaseous material is collectively indicated at 1.

The term "internally" means that the cavity 2 of the hollow body is internal to the body, which is to say that, for example, the body has an inner surface that defines, at least partially, such cavity and that is in contact with a liquid, solid or gaseous material that flows, or is contained, at least partially, in the cavity, and an outer surface of the hollow body that instead is in contact with the external environment or, for example, with a different or other element with respect to the one contained, or that flows, in the cavity. This type of internally hollow bodies includes, for example conduits, channels, pipes or container bodies.

The internally hollow body 1 comprises a main body 4 shaped so as to comprise side walls 6, having an inner surface 8 which at least partially defines said cavity 2 and which ends with a shaped edge 10 which delimits an engagement opening 12 to the cavity 2. The internally hollow body 1 further comprises a closure body 14, comprising side closure walls 16 having an inner sealing surface 18. Such inner sealing surface 18 is engaged at least partially with the inner surface 8 of the side walls 6 of the main body 4, and the closure body 14 at least partially closes the cavity 2 at the engagement opening 12.

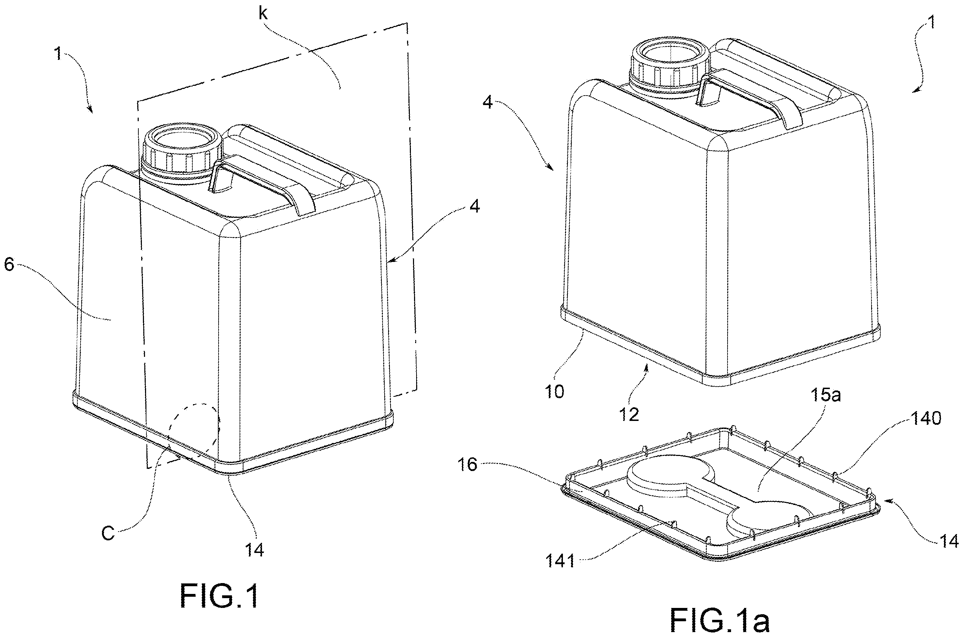

According to the invention, for example, such closure body 14 is the bottom of a container, as in the embodiment shown in figure 1 and figure 1a, or the cover, as in the embodiment shown in the document WO2016092407, or one of the two half-shapes that, when joined, form the entire internally hollow body, or simply a portion of the internally hollow body or an ancillary portion (for example a handle of a container, an inlet mouth and the like).

Additionally, the internally hollow body 1 comprises a joining element 20, also made of plastic, having the function of securely joining the main body 4 and the closure body 14.

Preferably, the plastic material with which the joining element 20 is made is adapted to fuse and weld with the plastic material with which the main body 4 or the closure body 14 is made. For example, the joining element is made of the same plastic material as the main body 4 and/or the closure body 14 or with a different plastic but one adapted to fuse with the plastic of the closure body 14 and/or of the main body 4.

The term plastic material or plastic means a polymer, for example a synthetic resin, or an elastomer, or a thermoplastic or thermosetting polymer preferably selected from the group of polyethylenes, polypropylenes, methacrylates, polycarbonates or polyamides.

Between the main body 4 and the closure body 14, there is an overmolding seat 22, and the joining element 20 is overmolded by injection to the main body 4 and the closure body 14, covering such overmolding seat 22.

Preferably, the main body 4 is joined to the closure body 14 at least partially along the shaped edge 10 by means of said joining element 20 or preferably along the entire shaped edge 10.

The overmolding of the joining element 20 on the closure body 14 and on the main body 4 occurs by injection molding, for example through a step of injection molding of a synthetic resin melted in the overmolding seat 22, when the closure body 14 and the main body 4 are mutually engaged and inserted in a mold 500 for overmolding the joining element 20.

Preferably, the closure body 14 is adapted to close completely and sealingly the cavity 2, at the engagement opening 12. In this way, hollow containers are created able to contain, for example, liquid, solid or gaseous substances, such as vials, barrels, jerrycans, flasks, bins, tanks, floats, buoys, lifebuoys, fenders, small cisterns, or bottles, wherein the closure body 14 is preferably the bottom or the cover of such containers. In the case of internally hollow bodies for which, once closed, it is not necessary to access the inner cavity again, such as floats, buoys, lifebuoys or fenders, the closure body 14 and the main body 4 respectively represent each of the two half-shells (preferably equal to each other) to be joined by the joining element to form the buoy, float, lifebuoy or fender.

The closure body 14 has, moreover, a mold engagement cavity 30 in which a mold 500 for injection molding or a part thereof is adapted to counteract the pressure generated in the overmolding seat 22 by injection means during an overmolding step of the joining element 20 and is at least partially couplable by shape-coupling. This mold engagement cavity 30 is preferably formed externally of the cavity 2 of the hollow body 1, i.e. it is at least partially delimited from the outer surface of the closure body opposite the inner surface facing the cavity 2 of the hollow body 1. In other words, the mold engagement cavity 30 is arranged on the opposite side with respect to the inner cavity 2 of the hollow body and is defined at least in part (or totally) by the outer surface adapted to be in contact with the external environment or in any case with a different element than that which is contained or flows into the cavity 2 (i.e. the mold engagement cavity 30 does not face into the cavity 2). For example, such mold engagement cavity 30 is delimited by the outer closure surface 17 of the side closure walls 16 of the closure body, opposite the inner sealing surface 18 towards the mold engagement cavity 30. In this way, one avoids that, during the overmolding step, the injection of the resin forming the joining element 20, causes a disengagement between the inner sealing surface 18 of the closure body 14 and the inner surface 8 of the side walls 6 the main body 4.

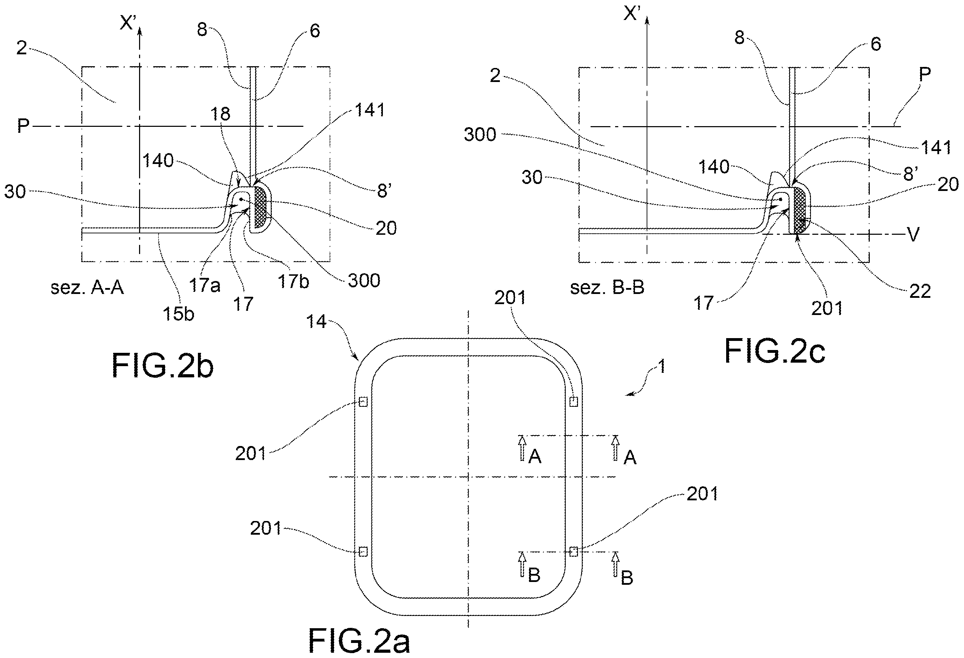

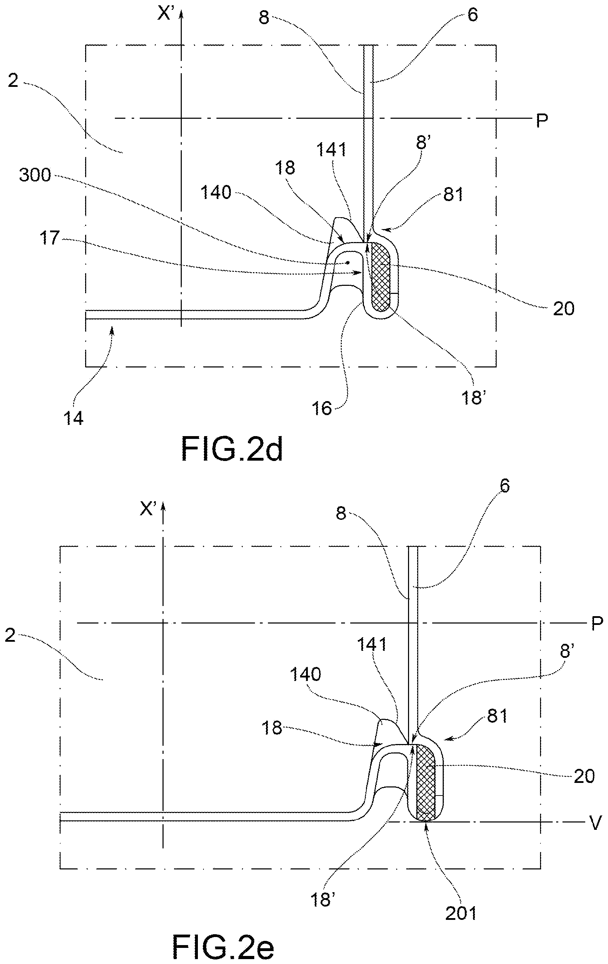

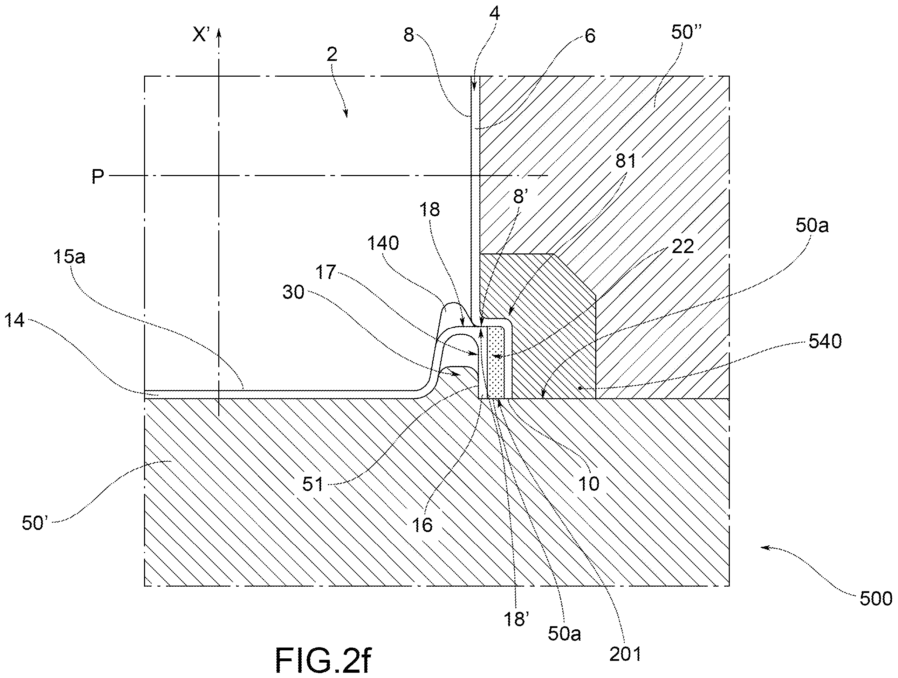

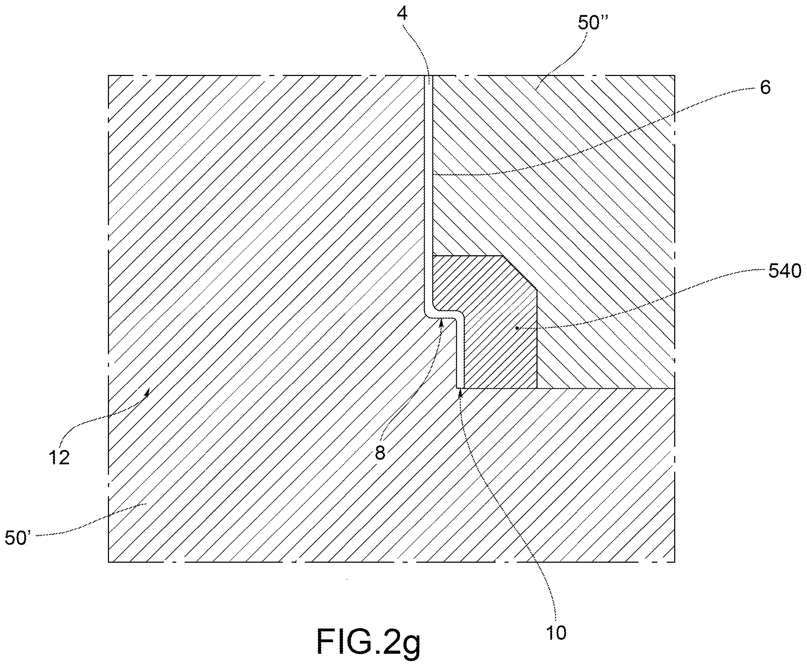

Preferably, as shown for example in figure 2f, the outer closure surface 17 that defines the mold engagement cavity 30 faces the opposite side with respect to the cavity 2. It follows that the mold 500 engages the mold engagement cavity 30 externally with respect to the cavity 2 of the hollow body 1 obtained at the end of the molding step. In this way, the molding steps are reduced, and it is also possible to produce totally closed hollow bodies 1. In effect, if the mold engagement cavity 30 were formed in the cavity part 2 of the hollow body 1, in the case of totally closed hollow bodies, the mold portion inside the mold cavity 30 and the cavity 2 would not allow the total closure of the hollow body 1. In effect, in this latter case, it would be necessary to leave an access to the cavity 2 free for removing the overmolding mold 500 (or part of it, for example, the die or the punch).

The inner sealing surface 18 of the closure body 14 is engaged at least partially in abutment with the inner surface 8 of the main body 4 along the engagement portion 8' of such inner surface 8 in such a way as to counteract a mechanical stress between the closure body 14 and the main body 4 along a preferential direction X' (for example a main vertical direction of extension of the hollow body) and in the direction of insertion of the closure body 14 in the inner cavity 2. In other words, the engagement between the inner sealing surface 18 and the inner surface of the main body 4 allows any compressive stress between the closure body 14 and the main body 4 to be distributed along the side walls 6 of the main body. This advantageously allows any impulsive loads acting between the main body 4 and the closure body 14, for example, the hollow body accidental falling, to be supported. For example, in the case wherein the hollow body 1 is a jerrycan containing liquid, the mechanical stress along the preferential direction X', due to the jerrycan accidently falling with impact on the closure body 14, would be directly distributed by the closure body 14 to the side walls 6 of the main body 4, ensuring greater impact strength.

Preferably, advantageously, the engagement portion 8' is an engagement surface inclined with respect to the preferential direction X', even more preferably perpendicular to the preferential direction X'. For example, the engagement portion 8' is the rise of a step 81 formed on the side walls 6 of the main body 4.

Preferably, moreover, the inner sealing surface 18 of the closure body 14 comprises an abutment portion 18', inclined (preferably perpendicular) with respect to the preferential direction X' and sealingly resting on the engagement portion 8' of the main body 4. This allows both a sealed joint to be obtained between the closure body 14 and the main body 4 (particularly advantageous in the case of hollow bodies of solid, liquid or gaseous substances) and any mechanical stress to be distributed along an extended contact surface.

In accordance with the invention, the joining element 20 is contained along its sides between the side walls 6 of the main body and the side closure walls 16. In this way, the joining element remains hidden from the view of an observer looking at the hollow body along a direction perpendicular to the side walls. Moreover, preferably, having defined a transverse plane P perpendicular to the preferential direction X' (for example perpendicular to the side walls 6), the joining element 20 is in contact with the external environment only along an outer surface 201, having at least a virtual tangent plane V parallel to said transverse plane P. In other words, for example in the case of a container or a jerrycan, the joining element 20 is preferably in contact with the outside only along a surface thereof facing outwards on the opposite side of the bottom of the container or the jerrycan (for example as shown in figures 2a to 2f).

Preferably, the outer surface 201 of the joining element is in contact with the outside in a discontinuous manner, i.e. only in regions spaced from one another, as shown for example in figure 2a. In other words, the joining element is totally contained between the side walls 6 of the main body and the side closure walls 16 of the main body, except at such regions spaced apart from one another in contact with the external environment. In particular, these spaced regions of the outer surface 21 are preferably located at the entry points of the resin during the overmolding step of the joining element 20 inside the mold 500.

In one embodiment (for example shown in figure 2f), the joining element 20 is in contact with the external environment only along its outer surface 201, flat and parallel to said transverse plane P.

Furthermore, guide ribs 140 are preferably formed on the closure body 14, adapted to guide the closure body 14 during the step of coupling with the main body 4 towards the inner cavity 2. Preferably, the guide ribs are spaced from one another and protrude from the main body 14 towards the inner cavity 2. Moreover, preferably, the guide ribs 140 comprise an inclined surface 141 adapted to slide along an edge of the side walls 6 of the main body during the coupling step. Such inclined surface 141 is, for example, connected to the abutment portion 18', so as to facilitate the engagement of the closure body 14 during the insertion step in the main body 4 until it abuts the abutment portion 18' with the engagement portion 8' of the main body 4.

The internally hollow body 1 described up to now may be obtained by means of the mold 500 and through a production method according to the continuation of the present description.

Mold 500 means a mold for injection molding, for example formed of two or more half-molds, for example a punch 50' and a die 50'', each bearing an impression designed to engage according to shape-coupling with the main body 4 or with the closure body 14. For example, the main body 4 is inserted in the die 50" of the overmolding mold 500 according to shape-coupling and the closure body 14 is inserted into the punch 50' of the mold 500 according to shape-coupling. Preferably, a part of the walls forming the punch and/or a part of the walls forming the die are adapted to counteract the pressure generated on the overmolding seat 22 by the injection means during an overmolding step of the joining element 20.

Preferably, a die wall or only a punch wall 50a (and not both at the same time) is in contact with the synthetic resin during the overmolding step of the joining element, and, in addition to counteracting the pressure during the step of injecting the synthetic resin, such die or punch wall 50a defines an outer closure wall of the overmolding seat of the joining element. In this way, once the overmolded synthetic resin has solidified, at such outer closure wall of the overmolding seat, the outer surface portion 201 of the joining element 20 is formed. In this way, the joining element 20 is contained along its sides between the side walls 6 of the main body and the side closure walls 16, avoiding making the structure of the mold 500 complex.

In one case, the mold engagement cavity 30 comprises an abutment surface 50 adapted to receive in abutment a portion of the mold and side walls forming the outer closure surface 17 on which the mold walls 51 are at least partially engaged to counteract the pressure generated by the injection means during the overmolding step of the joining element 20.

Preferably, the mold engagement cavity 30 has an annular shape with a "U" cross-section.

Preferably, the joining element 20 completely fills the overmolding seat 22, so as to allow stable welding between the main body 4 and the closure body 14.

Preferably, moreover, the overmolding seat 22 (and therefore the joining element 20, once molded), is delimited both on the top and on the side by the inner surface 8 of the side walls 6 of the main body 4 and, on the side facing the inner cavity 2, by the side closure walls 16.

Moreover, preferably, the joining element 20, annularly wraps the hollow body 1, creating a sealing welded ring between the main body 4 and the closure body 14.

In the case wherein the closure body 14 or the main body 4 also acts as the bottom of a container, such main body 4 or the closure body 14 comprises a bottom wall, preferably integral with the side closure walls 16, having an upper bottom surface 15a, which faces the cavity 2 of the container and which constitutes the inner bottom surface of the container. The bottom wall 15 further comprises an outer bottom surface 15b, opposite the upper bottom surface 15a, not communicating with the cavity 2, but facing the outside of the container.

In one other case, the internally hollow body 1 comprises at least one reinforcing wall 300, arranged transversely between two walls 17a, 17b facing each other and defining the mold engagement cavity 30.

According to the present invention, the method for producing the plastic, internally hollow body provides for joining the main body 4 and the closure body 14 in the same step wherein occurs the molding of a second closure body 14' and/or of a second main body to be used in a subsequent union step to obtain a second internally hollow body.

Preferably, the production of an internally hollow body 1 according to the present invention is defined in independent claim 3.

Preferably, the main body 4 shaped in plastic and the closure body 14 are made by injection molding.

Furthermore, it is provided that in the mold engagement cavity 30 of the closure body 14 or of the main body 4, the mold 500 is inserted at least partially according to shape-coupling with the mold engagement cavity 30 of the closure body 14 or of the main body 4 in such a way that at least one of the walls of the mold counteracts the pressure generated on the overmolding seat 22 by the injection of natural or synthetic resin by the injection means during the overmolding step of the joining element 20.

Preferably, the overmolding step of the joining element 20, provides that the molten synthetic resin which, once solidified, constitutes the joining element 20, is injected into the molding seat 22 at high temperature, while the main body 4 and the closure body 14 are inserted into the mold 500. In this step, when the molten resin at high temperature comes into contact with the walls of the overmolding seat 22 (for example, the inner sealing surface 18 of the side closure walls 16, the inner surface 8 of the side walls 6, the shaped edge 10), it causes the onset of fusion on the surface, i.e., a new transition of state from solid to molten form, allowing an effective and complete welding of the joining element 20 with the main body 4 and with the closure body 14 due to the fusion of the materials and the subsequent resolidification step.

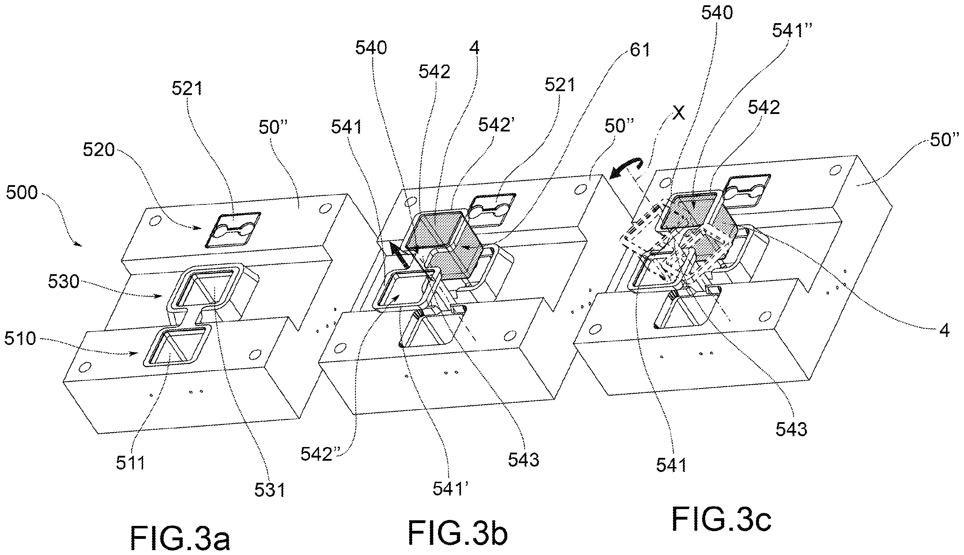

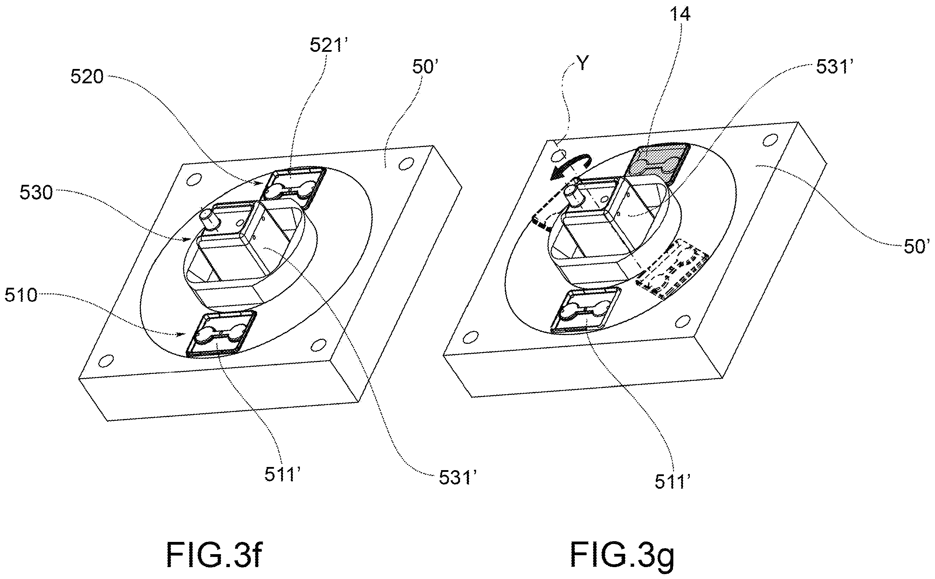

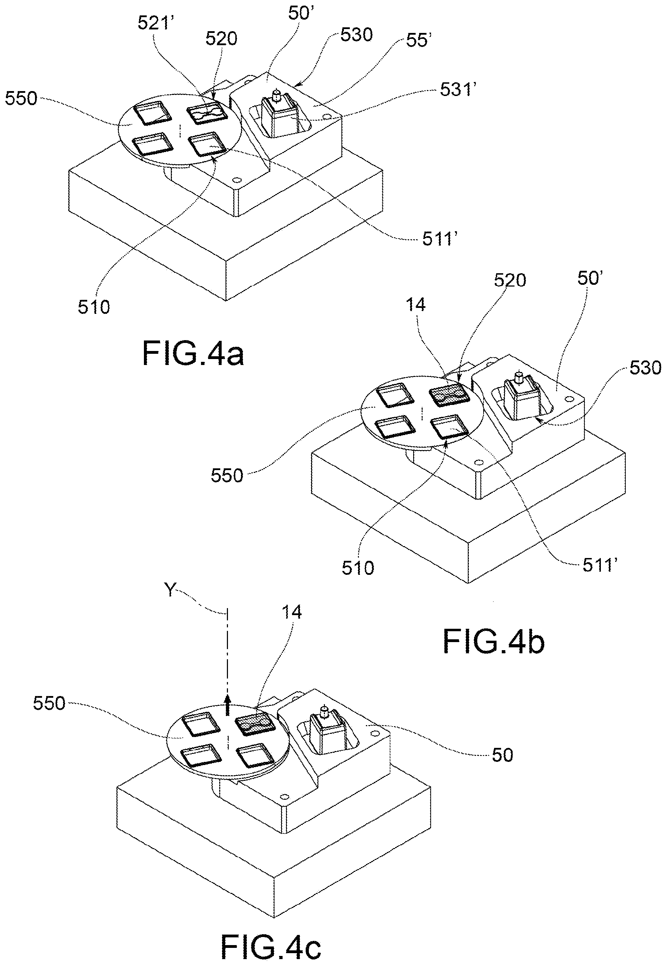

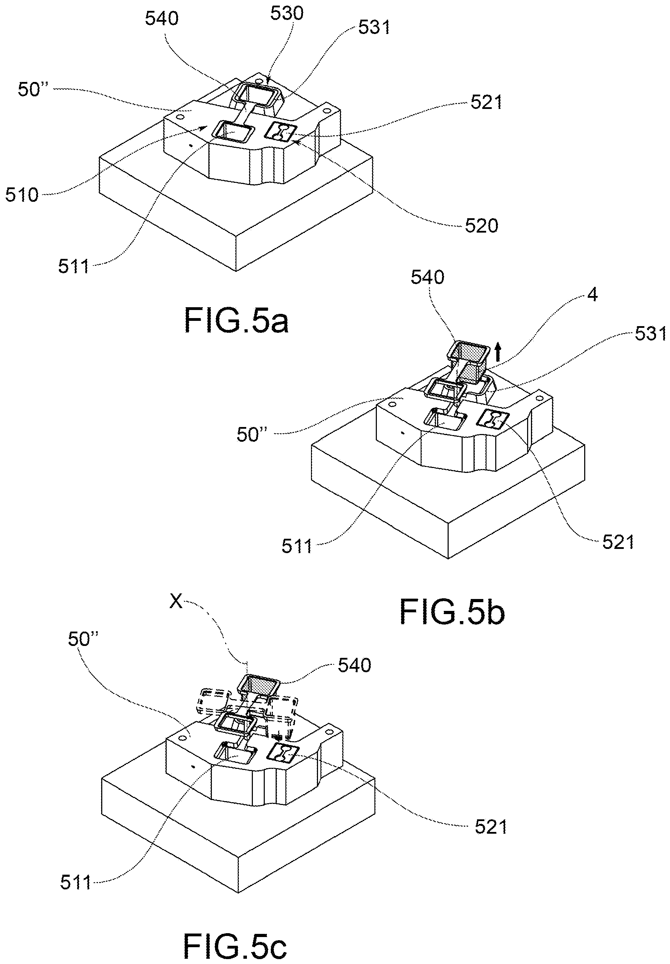

Referring now to figures 3a to 5e, the internally hollow plastic body 1 is made by injection molding in a single mold comprising multiple cavities 510, 520, 530. Each of said multiple cavities 510, 520, 530 is formed by the juxtaposition of respective die impressions 511, 521, 531 and respective punch impressions 511', 521', 531' obtained respectively on the die 50" and on the punch 50' of the mold 500. The cavities 510, 520, 530 are then formed when the mold 500 is closed by putting the respective die impressions and the punch impressions together. In each group of figures 3a to 3e and 5a to 5e, a variant embodiment of the die 50" of the mold 500, coupled with respective punch variants 50', shown in figures 3f to 3i and 4a to 4m respectively, is illustrated according to a coupling clearly understandable to the person skilled in the art, executable in a cyclic and continuous way. In other words, figures 3a to 3e show the steps of the method on the die 50" side and figures 3f to 3i show the steps of the method on the punch 50' side. Figures 4a to 4m show the steps of the punch 50' side method and figures 5a to 5e show the steps of the die side method 50".

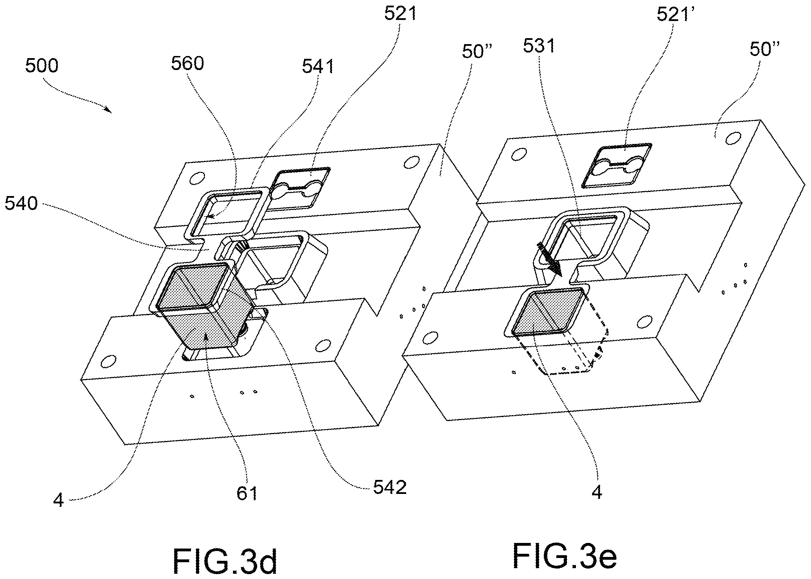

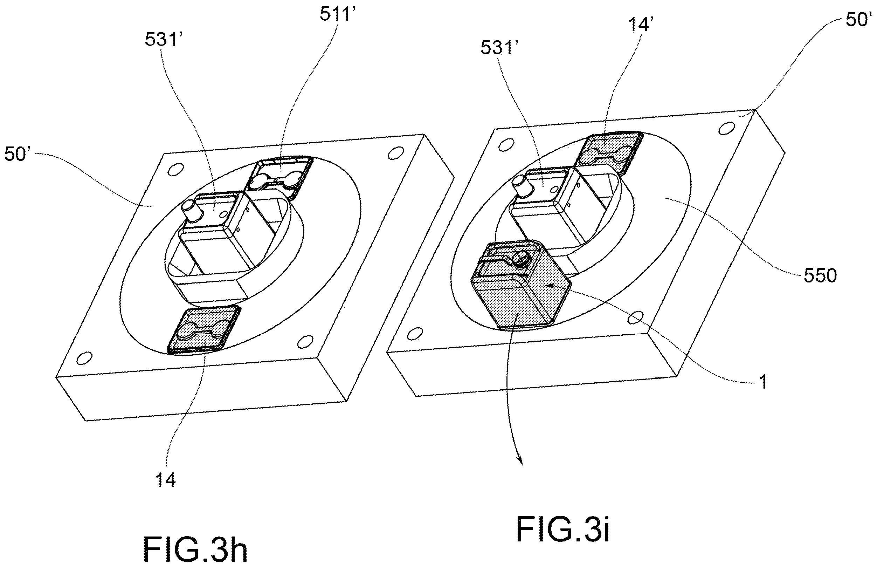

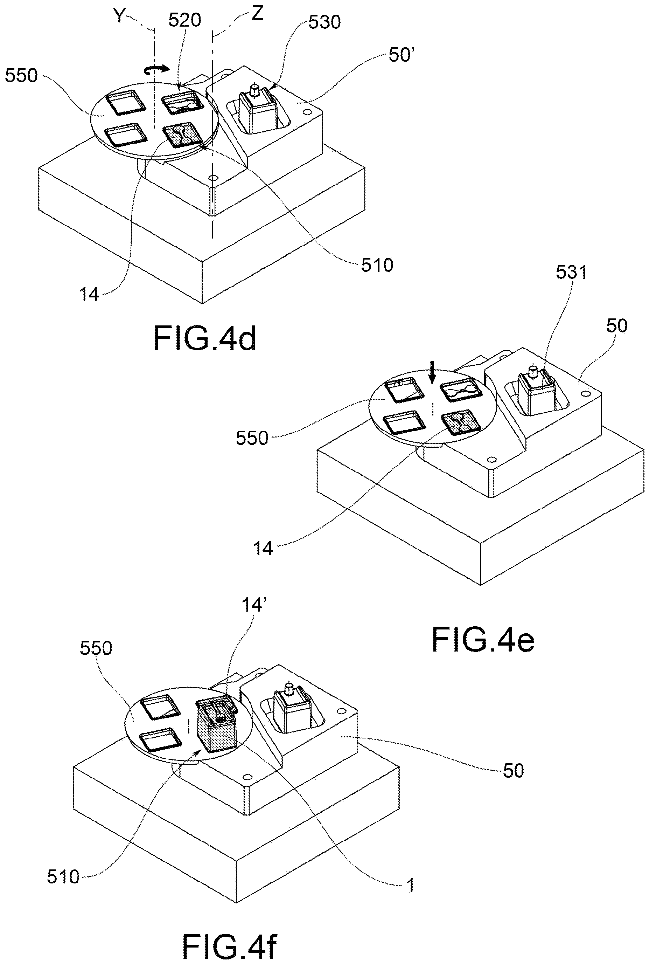

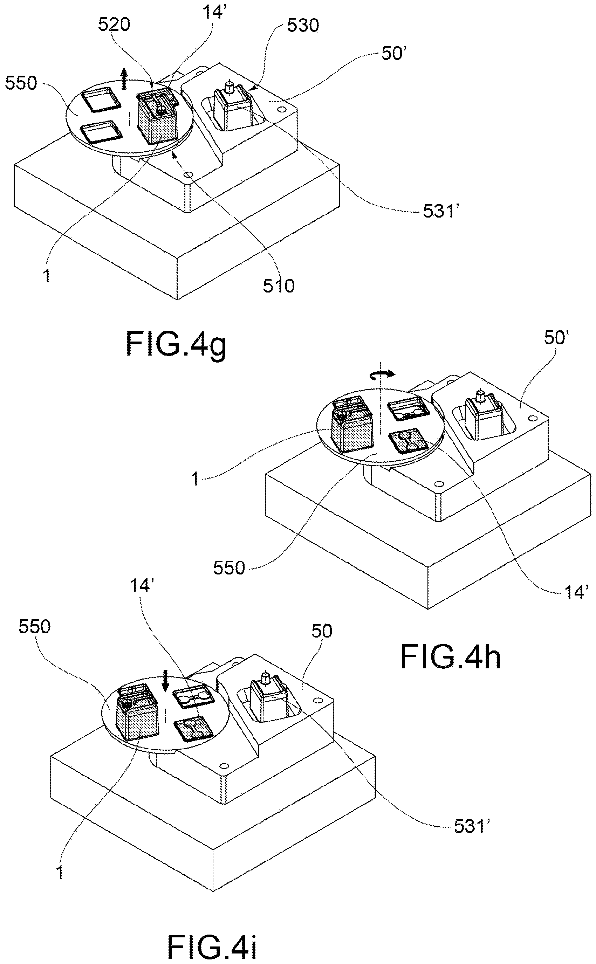

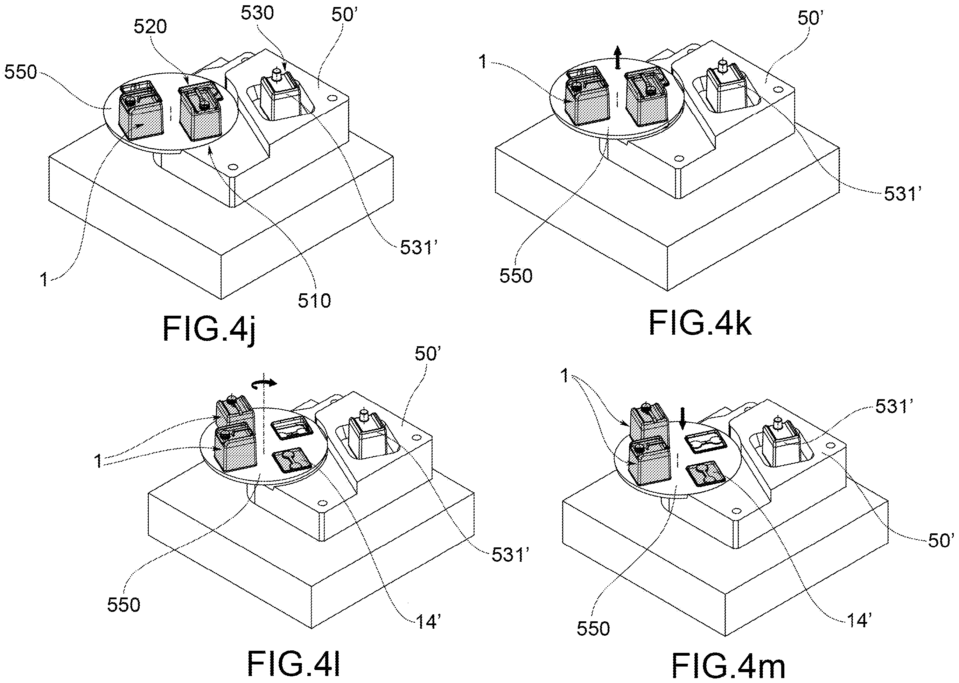

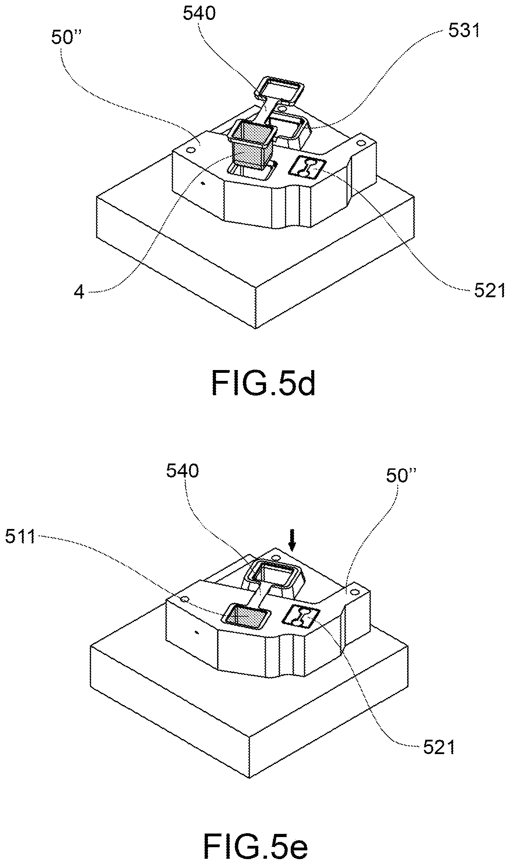

The production method of the hollow body 1 comprises the steps of:
a) molding a first main body 4 in a main cavity 530 of said multiple cavities 510, 520, 530 and a first closure body 14 in a closure cavity 520 of said multiple cavities 510, 520, 530 (for example by closing the die in figure 3a on the punch in figure 3f, or the punch in figure 4a on the die in figure 5a);
b) opening the mold 500;
c) transferring the first main body 4 from a main impression 531, 531' of such die impressions 511, 521, 531 or punch impressions 511' 521', 531' to a union impression 511, 511' of such die impressions 511, 521, 531 or such punch impressions 511', 521', 531' by moving a movable shaped element 540 which carries the first main body 4 (for example, as shown in figures 3b to 3e or 5b to 5e);
d) engaging the movable shaped element 540 with the die 50" or with the punch 50' of the mold 500 so that such movable shaped element 540 forms a portion of the main impression 531, 531' of the main cavity 530 when the mold is closed for molding (for example, as illustrated in figures 3e and 5e);
e) in a same step, i.e. keeping the mold closed, molding a second closure body 14' in the closure cavity 520 and joining the first main body 4 and the first closure body 14 in the union cavity 510 of said multiple cavities 510, 520, 530 (for example, by closing the die in figure 3e on the punch in figure 3h, or of the punch in figure 4e on the die in figure 5e or the punch in figure 4i on the die in figure 5e, or the punch in figure 4m on the die in figure 5e).
As described above, in step d), therefore, the movable shaped element 540 forms only a portion of the main impression 531, 531' of the main cavity 530, allowing advantages to be obtained which will be more understood from the continuation of the description.

It is clear that resin is injected into the main cavity 530 to generate the main body 4 and resin is injected into the closure cavity 520 to generate the closure body 14.

In the union cavity 510, the resin is injected into the overmolded seat 22 to overmold the joining element 20 between the main body 4 and the closure body 14.

Moreover, "same step" means that the union between the first closure body 14 and the first main body 4 takes place without opening the mold before the molding of the second closure body 14' has been completed. In other words, when the mold 500 is closed, the plastic resin is injected both to overmold the joining element between the main body 4 and the closure body 14 in the union cavity 510, and to mold a second closure body 14' in the closure cavity 520 to be used in a subsequent union (overmolding) step. For example, this is permitted due to an injection device inside the mold (not shown but known to the person skilled in the art) adapted to inject the polymer resin both into the main cavity 530 and into the union cavity 510 and into the closure cavity 520. Furthermore, this is also permitted by the use of a bi-injection press if it is decided to join the two half-shells with a different or other colored material.

Preferably, even more advantageously, in step e) it is also envisaged to mold a second main body to be used in the subsequent union (overmolding) step with the second closure body 14'.

Preferably, moreover, the injection of polymer resin for the molding of the second main body, of the second closure body 14' and for the overmolding of the joining element 20 between the first main body 4 and the first closure body takes place sequentially or simultaneously in the main cavity 530, the closure cavity 520 and the union cavity 510.

As previously described, the union of the first main body 4 and the first closure body 14 takes place by injection overmolding of a joining element 20 along the overmolding seat 22.

Preferably, the movement of the movable shaped element 540 comprises the step of rotating the shaped element 540 about an axis of rotation X and translating such movable shaped element 540 along a direction of extraction of the main body 4 from the die 50" or from the punch 50'.

Preferably, before step c) the movable shaped element 540 is engaged with the die 50" or with the punch 50' so as to form at least partially (and therefore not totally), the main impression 531 (as for example illustrated in figures 3a and 5a).

Preferably, moreover, the method comprises the step of:
d1) engaging the movable shaped element 540 with the die 50" or with the punch 50' of the mold 500 so that the movable shaped element 540 forms a portion of the union impression 511 of the union cavity 510 when the mold is closed for molding.

In certain circumstances, step d1) is carried out substantially simultaneously with step d). In other words, the movable shaped element 540 engages both with the union cavity 510 and with the main cavity 530 so as to form a portion of the union impression 511 and a portion of the main impression 531 when the mold is closed for molding. It is therefore clear that the movable shaped element 540 engages both with the union cavity 510 and with the main cavity 530 in such a way as to form only a portion of the union impression 511 and only a portion of the main impression 531, and not the totality of the impression 511 and/or of the main impression 531, when the mold is closed for molding.

The mold 500 comprises:
- a die 50" comprising a main die impression 531, a die union impression 511 and a die closure impression 521;
- a punch 50' comprising a main punch impression 531', a union punch impression 511' and a punch closure impression 521'.

The punch impressions 511', 521', 531' and the die impressions 511, 521, 531 are adapted to come together to form the multiple molding cavities 510, 520, 530, already described above.

The mold 500 further comprises a movable shaped element 540 movable for transferring the first main body 4 from the main impression of the die 531 or of the punch 531' to the union impression of the die 511 or of the punch 511'. Moreover, such a movable shaped element 540 is adapted to engage with the die 50" or with the punch 50' of the mold 500 so as to form at least a portion of the main impression of the die 531 or of the punch 531'.

Preferably, the movable shaped element 540 is adapted to engage with the die 50" or with the punch 50' so as to form at least a portion of the union impression of the die 511 or of the punch 511'.

In certain circumstances, the movable shaped element 540 comprises a union portion 541 and a main portion 542 joined together by a connecting portion 543. The union portion 541 and the main portion 542 are adapted to engage with the union impression of the die 511 and with the main impression of the die 531 or with the union impression of the punch 511' and with the main impression of the punch 531'.

The movable shaped element 540 is adapted to engage with the die 50" or with the punch 50' so as to form only a portion of the union impression of the die 511 or the punch 511'.

Preferably, the union portion 541 and the main portion 542 each comprise a frame 541', 542' which surrounds a housing 541'', 542'' adapted to receive the main body 4 therein. Such frame 541', 542'' is adapted to engage with the punch or with the die to form a portion of the union impression and/or the main impression of the punch or the die.

The possibility of moving only a portion of the union impression and/or the main impression of the punch or die allows reduced inertias to be obtained during the movement and therefore higher speeds of movement (for example of rotation), as well as require less power of the movement actuator means.

In one case, the frame 541', 541" comprises an inner side surface 560, which faces the housing 541'', 542''. Such inner side surface 560 is shaped in such a way as to engage with the outer side surface 61 of the main body 4 (for example the outer surface of the side walls 6). Such outer side surface 61 is the surface of the main body which faces away from the inner cavity 2 of the hollow body 1.

In one case, the shaped movable element 540 is rotatable about an axis of rotation X parallel to the direction of movement of the die 50" and of the punch 50' in the closing/opening of the mold 500. Such movable shaped element 540 is moreover translatable along the extraction direction of the main body 4 from the die or the punch.

In one case, the punch 50' comprises a rotating base 550, rotatable about a base axis of rotation Y. On such rotating base 550 are supported the punch union impression 511' and the punch closure impression 521'.

In one case, the rotating base 550 is arranged about the main punch impression 531'. Preferably, the base axis of rotation Y passes through the main impression of the punch 531'. Still more preferably, the rotating base 550 is in the shape of a circular crown arranged around the main impression of the punch 531'. Moreover, preferably, the base axis of rotation Y coincides with the central axis Z of the mold 500.

With more detailed reference to figures 3a to 3i, in order to obtain the internally hollow body 1, it is envisaged to mold first the main body 4 and the closure body 14 (closing the die in figure 3a on the punch in figure 3f). After having opened the mold, by means of the movable shaped element 540, the main body 4 is extracted from the main impression 531 (figure 3b), and the main body (figure 3c) is rotated to insert it into the union impression 511 (figures 3d, 3e). On the punch side 50', the rotating base 550 (figures 3g, 3h) is moved so as to bring the closure body 14 into a position corresponding to the union cavity 510 (figure 3h). Subsequently, the mold 500 is closed (the die in figure 3e with the punch in figure 3h). The main body 4 and the closure body 14 engage with each other and the joining element 20 is overmolded by injection in the union cavity 510 and at the same time a second closure body 14' is molded into the closure cavity 520 and a second main body is molded in the main cavity 530; then the mold is opened (figure 3i) and the finished hollow body 1 is picked up. At this point, the molding resumes again cyclically with the extraction of the second main body from the main impression 531 (figure 3b) and with the movement of the rotating base 550 (figures 3g, 3h) so as to bring the second closure body 14' into the position corresponding to the union cavity 510 (figure 3h) and so on.

In figures 4a to 4m, the rotating base 550 is arranged adjacent to the main punch impression 531'.

Preferably, the base axis of rotation Y does not pass through the main punch impression 531'.

Preferably, the base axis of rotation Y is spaced with respect to the central axis of the mold 500. In this case, advantageously, by means of a simple rotation, the finished hollow body 1 is positioned in a position further from the center of the mold, towards the periphery of the mold, guaranteeing an easier and more convenient pick-up of the finished piece.

With more detailed reference to figures 4a to 5e, in order to obtain the internally hollow body 1 it is envisaged to mold first the main body 4 and the closure body 14 (by closing the die in figure 5a on the punch in figure 4a). After having opened the mold, the main body 4 is extracted from the main impression 531 (figure 5b) by means of the movable shaped element 540, and the main body (figure 5c) is rotated to insert it into the union impression 511 (figures 5d, 5e). On the punch side 50', the rotating base 550 (figures 4b to 4e) is moved so as to bring the closure body 14 into a position corresponding to the union cavity 510 (figure 4e). Preferably, the rotating base 550 is moved by means of a first translation movement along the base axis of rotation Y adapted to detach the closure body 14 from the closure impression 521' of the punch. Rotating means of the rotating base then move the base about the base axis of rotation Y to bring the closure body 14 to correspond with the union cavity 510 (figure 4d). Subsequently, translation means of the rotating base 550 move the rotating base 550 with a second translation movement in the direction opposite to the first translation movement along the base axis of rotation Y (figure 4e).

Contrary to the disclosure of figures 3f to 3i wherein the closure impression 521' rotates integrally with the rotating base 550, the closure impression 521' is fixed and integrally supported by a base body 55' of the punch 50', separate from the rotating base. In this case, the rotating base 550 acts only as a transport tray for the closure body 14, allowing a reduction of the total mass of the base to be rotated and the relative inertial moments during rotation. Advantageously, this allows the torque that the rotating means must deliver to rotate the rotating base to be reduced, with a consequent reduction of the dimensions of the rotation means, an increase in the speed of variation of the rotation (and of the molding times) and simplification of the mold structure. Subsequently, the mold 500 is closed (the die in figure 5e with the punch in figure 4e). The main body 4 and the closure body 14 engage with each other and the joining element 20 is overmolded by injection in the union cavity 510 and at the same time a second closure body 14' is molded in the closure cavity 520 and a second main body in the main cavity 530; then, the mold is opened (figure 4f). At this point, the molding resumes again cyclically with the extraction of the second main body from the main impression 531 (figure 5b) and with the movement of the rotating base 550 as already described previously (figures 4g to 4i), so as to bring the second closure body 14' into the position corresponding to the union cavity 510 (figure 4) and so on (figure 4j to 4m).

Innovatively, the internally hollow body 1 due to the particular configuration of engagement between the closure body and the main body and to the disposition of the joining element, allows any impulsive and compression loads acting on the hollow body to be resisted in a more robust manner and at the same time maintains a pleasant overall aesthetic of the product by not showing the unsightly joining element.

Moreover, the production method of the internally hollow body 1 described in the preceding paragraphs, allows several types of internally hollow bodies (for example containers) to be made mainly for the food, chemical or petrochemical sectors, or for cleaning or pharmaceutical sectors, or for glues or paints or solvents, or for the boating or gardening sectors.

In particular, the method according to the present disclosure allows internally hollow bodies for injection molding to be made in a more efficient manner, due to the union between the main body and the closure body and to the simultaneous molding of a second closure body, usable in the subsequent union cycle for overmolding.

Advantageously, therefore, the method allows one to combine, on the one hand, the advantages of injection molding techniques with respect to blow molding or rotational molding techniques, and on the other it allows one to speed up the production, increasing efficiency. This allows both the range of shapes and finishes of internally hollow bodies that may be achieved to be expanded and the manufacture process to be improved.

Advantageously, moreover, the production method of internally hollow bodies according to the present disclosure allows the parallelization of the molding process to be increased, due to the possibility of simultaneously molding several internally hollow bodies and at the same time multiple main bodies and closure bodies, eliminating at least the step of withdrawing the closure body (or of the main body) from the mold and the subsequent insertion into the mold intended for overmolding, "replacing it" with rotating operations of a movable shaped element and a rotating base. This makes it possible to move on to the overmolding phase of the joining element in a quicker and more automated manner and, therefore, with an improved productive efficiency.

Moreover, since the movable element and the rotating base are relatively light devices, they do not require expensive and complicated handling means, which, however, are required in the case of rotating entire half-molds of greater weight and subject to greater inertias. In effect, due to the reduced inertias, the movable element and the rotating base may be moved more quickly, reducing the total molding times.

## Claims

1. Internally hollow plastic body (1), having a cavity (2), preferably adapted to contain liquid, solid or gaseous material, comprising:
- a main body (4) shaped so as to comprise side walls (6), having an inner surface (8) that at least partially defines said cavity (2) and comprising an engagement portion (8'), said inner surface (8) delimiting an engagement opening (12) with the cavity (2);
- a closure body (14) comprising side closure walls (16) having an inner sealing surface (18), said closure body (14) closing at least partially the cavity (2) at the engagement opening (12);
- a joining element (20) made of plastic, which joins the main body (4) to the closure body (14), said joining element (20) covering an overmolding seat (22) between the main body (4) and the closure body (14);
wherein the closure body (14) has a mold engagement cavity (30) in which a mold (500) for injection molding can be at least partially coupled by shape-coupling, adapted to counteract the pressure generated in the overmolding seat (22) by injection means during an overmolding step of the joining element (20),
and wherein the inner sealing surface (18) of the closure body (14) is engaged at least partially in abutment with the inner surface (8) of the main body (4) along the engagement portion (8') in such a way as to counteract a mechanical stress between the closure body (14) and the main body (4) along a preferential direction (X') and in the direction of insertion of the closure body (14) in the inner cavity (2),
**characterized in that** the joining element (20) is contained along its sides between the side walls (6) of the main body and the side closure walls (16).

2. Internally hollow body (1) according to claim 1, wherein, having defined a transverse plane (P) perpendicular to the preferential direction (X'), said joining element (20) is in contact with the external environment only along an outer joining element surface thereof (201), said outer surface (201) having at least one virtual tangent plane (V) parallel to said transverse plane (P).

3. Method for the production of an internally hollow plastic body (1) according to any one of the preceding claims, by injection molding in a mold (500) comprising multiple cavities (510, 520, 530), each of said multiple cavities (510, 520, 530) being formed by approaching respective die impressions (511, 521, 531) and respective punch impressions (511', 521', 531') formed on the die (50") and on the punch (50'), respectively, of the mold (500), the method comprising the steps of:
a) molding a first main body (4) in a main cavity (530) of said multiple cavities (510, 520, 530) and a first closure body (14) in a closure cavity (520) of said multiple cavities (510, 520, 530);
b) opening the mold (500);
c) transferring the first main body (4) from a main impression (531, 531') of said die (511, 521, 531) or punch (511', 521', 531') impressions to a union impression (511, 511') of said die or punch impressions by moving a movable shaped element (540) which carries the first main body (4);
d) engaging the movable shaped element (540) with the die (50") or with the punch (50') of the mold (500) so that said movable shaped element (540) forms a portion of the main impression (531, 531') of the main cavity (530) when the mold is closed for molding;
e) molding a second closure body (14') in the closure cavity (520) and, while keeping the mold closed, in the union cavity (510) of said multiple cavities (510, 520) overmolding by injection a joining element (20) between the main body (4) and the closure body (14) along an overmolding seat (22).

4. Method according to claim 3, wherein the movement of the movable shaped element (540) comprises the step of rotating the movable shaped element (540) about an axis of rotation (X) and translating the movable shaped element (540) along a direction of extraction of the main body (4) from the die (50") or from the punch (50').

5. Method according to any of claims 3 to 4, wherein before step c), the movable shaped element (540) is engaged with the die (50'') or with the punch (50') in such a way as to at least partially form the main impression (531).

6. Method according to claim 5, wherein the movable shaped element (540) is engaged with the die (50'') or with the punch (50') in such a way as to not totally form the main impression (531), i.e. only partially.

7. Method according to any one of claims 3 to 6, further comprising the step of:
d1) engaging the shaped element (540) with the die (50") or with the punch (50') of the mold (500) so that said movable shaped element (540) forms a portion of the union impression (511) of the union cavity (510) when the mold is closed for molding.

8. Method according to any one of claims 3 to 8, wherein in step e) a second main body is molded in the main cavity (530).

9. Mold for the production of an internally hollow plastic body (1) according to claim 1 or 2, having an inner cavity (2), by injection molding of a main body (4), a closure body (14) and a joining element (20) between the main body and the closure body, comprising:
- a die (50") comprising a main die impression (531), a die union impression (511) and a die closure impression (521);
- a punch (50') comprising a main punch impression (531'), a punch union impression (511') and a punch closure impression (521');
said punch impressions (511', 521', 531') and die impressions (511, 521, 531) being adapted to be placed side by side to form multiple molding cavities (510, 520, 530);
said mold (500) comprising a movable shaped element (540) movable for transferring the first main body (4) from the main die (531) or punch (531') impression to the die union (511) or punch union (511') impression, said movable shaped element (540) being adapted to engage with the die (50") or with the punch (50') of the mold (500) so as to form at least a portion of the main die impression (531) or punch impression (531').

10. Mold according to claim 9, wherein the movable shaped element (540) is adapted to engage with the die (50") or with the punch (50') of the mold (500) so as to form at least a portion of the die union impression (511) or punch union impression (511').

11. Mold according to claim 9 or 10, wherein the movable shaped element (540) comprises a union portion (541) and a main portion (542) joined together by a connecting portion (543), wherein the union portion (541) and the main portion (542) are adapted to engage both with the die union impression (511) and the main die impression (531) or with both the punch union impression (511') and the main punch impression (531'),
and wherein the union portion (541) and the main portion (542) each comprise a frame (541', 542') which surrounds a housing (541", 542'') adapted to accommodate the main body (4) at its interior, said frame (541', 542'') being adapted to engage with the punch or with the die to form a portion of the union impression (511, 511') and/or of the main impression (531, 531') of punch or die.

12. Mold according to any one of claims 9 to 11, wherein the movable shaped element (540) is rotatable about an axis of rotation (X) parallel to the movement direction of the die and punch during the closing/opening of the mold, said movable shaped element (540) also being movable along an extraction direction of the main body (4) from the die or the punch.

13. Mold according to any one of claims 9 to 12, wherein the punch (50') comprises a rotating base (550), rotatable about a basic axis of rotation (Y), on said rotating base (550) being supported or obtained the punch union impression (511') and the punch closure impression (521').

14. Mold according to claim 13, wherein the rotating base (550) is arranged around the main punch impression (531').

15. Mold according to claim 13, wherein the rotating base (550) is arranged next to the main punch impression (531'), the basic axis of rotation (Y) being spaced with respect to a central axis (Z) of the mold (500).

## Patentansprüche

1. Innen hohler Kunststoffkörper (1) mit einem Hohlraum bzw. einer Kavität (2), der bzw. die vorzugsweise angepasst ist, flüssiges, festes oder gasförmiges Material zu enthalten, umfassend:
- einen Hauptkörper (4), der so geformt ist, dass er Seitenwände (6) umfasst, eine Innenfläche bzw. -oberfläche (8) aufweist, die den Hohlraum (2) zumindest teilweise definiert, und einen Eingriffsabschnitt (8') umfasst, wobei die Innenfläche (8) eine Eingriffsöffnung (12) mit dem Hohlraum (2) begrenzt;
- einen Verschlusskörper (14), der Seitenverschlusswände (16) mit einer inneren Dichtfläche bzw. -oberfläche (18) umfasst, wobei der Verschlusskörper (14) den Hohlraum (2) an der Eingriffsöffnung (12) zumindest teilweise verschließt;
- ein Verbindungselement (20) aus Kunststoff, das den Hauptkörper (4) mit dem Verschlusskörper (14) verbindet, wobei das Verbindungselement (20) einen Umspritzsitz (22) zwischen dem Hauptkörper (4) und dem Verschlusskörper (14) abdeckt;
wobei der Verschlusskörper (14) einen Formeingriffshohlraum bzw. eine Formeingriffskavität (30) aufweist, in dem bzw. der eine Form (500) zum Spritzgießen zumindest teilweise durch Formkopplung gekoppelt werden kann, die angepasst ist, dem Druck entgegenzuwirken, der in dem Umspritzsitz (22) durch Einspritzmittel während eines Umspritzschritts des Verbindungselements (20) erzeugt wird,
und wobei die innere Dichtfläche (18) des Verschlusskörpers (14) zumindest teilweise in Anlage mit der Innenfläche (8) des Hauptkörpers (4) entlang des Eingriffsabschnitts (8') derart in Eingriff ist, dass sie einer mechanischen Spannung zwischen dem Verschlusskörper (14) und dem Hauptkörper (4) entlang einer Vorzugsrichtung (X`) und in der Richtung des Einsetzens des Verschlusskörpers (14) in den inneren Hohlraum (2) entgegenwirkt,
**dadurch gekennzeichnet, dass** das Verbindungselement (20) entlang seiner Seiten zwischen den Seitenwänden (6) des Hauptkörpers und den Seitenverschlusswänden (16) enthalten ist.

2. Innen hohler Körper (1) nach Anspruch 1, wobei das Verbindungselement (20), das eine Querebene (P) senkrecht zu der Vorzugsrichtung (X`) definiert hat, lediglich entlang einer Verbindungselement-Außenfläche bzw. -oberfläche (201) davon mit der äußeren Umgebung in Kontakt ist, wobei die Außenfläche (201) mindestens eine virtuelle Tangentenebene (V) parallel zu der Querebene (P) aufweist.

3. Verfahren zur Herstellung eines innen hohlen Kunststoffkörpers (1) nach einem der vorhergehenden Ansprüche durch Spritzgießen in einer Form (500), die mehrere Hohlräume bzw. Kavitäten (510, 520, 530) umfasst, wobei jeder der mehreren Hohlräume (510, 520, 530) durch Annäherung jeweiliger Matrizenein- bzw. -abdrücke (511, 521, 531) und jeweiliger Stempelein- bzw. -abdrücke (511', 521', 531') gebildet wird, die auf der Matrize (50") bzw. auf dem Stempel (50') der Form (500) ausgebildet sind, wobei das Verfahren die Schritte umfasst:
a) Formen eines ersten Hauptkörpers (4) in einem Haupthohlraum bzw. einer Hauptkavität (530) der mehreren Hohlräume (510, 520, 530) und eines ersten Verschlusskörpers (14) in einem Verschlusshohlraum bzw. einer Verschlusskavität (520) der mehreren Hohlräume (510, 520, 530);
b) Öffnen der Form (500);
c) Überführen des ersten Hauptkörpers (4) von einem Hauptein- bzw. -abdruck (531, 531') der Matrizen(511, 521, 531)- oder Stempel(511', 521', 531')-Ein- bzw. -Abdrücke zu einem Vereinigungsein- bzw. -abdruck (511, 511`) der Matrizen- oder Stempelein- bzw. -abdrücke durch Bewegen eines bewegbaren bzw. beweglichen geformten Elements bzw. Formelements (540), das den ersten Hauptkörper (4) trägt;
d) In-Eingriff-Bringen des bewegbaren geformten Elements (540) mit der Matrize (50") oder mit dem Stempel (50') der Form (500), sodass das bewegbare geformte Element (540) einen Abschnitt des Haupteindrucks (531, 531') des Haupthohlraums (530) bildet, wenn die Form zum Formen geschlossen wird;
e) Formen eines zweiten Verschlusskörpers (14') in dem Verschlusshohlraum (520) und, während die Form geschlossen gehalten wird, Umspritzen eines Verbindungselements (20) zwischen dem Hauptkörper (4) und dem Verschlusskörper (14) entlang eines Umspritzsitzes (22) durch Einspritzen in dem Vereinigungshohlraum bzw. der Vereinigungskavität (510) der mehreren Hohlräume (510, 520).

4. Verfahren nach Anspruch 3, wobei die Bewegung des bewegbaren geformten Elements (540) den Schritt des Drehens des bewegbaren geformten Elements (540) um eine Drehachse (X) und des Verschiebens des bewegbaren geformten Elements (540) entlang einer Richtung der Entnahme des Hauptkörpers (4) aus der Matrize (50") oder aus dem Stempel (50') umfasst.

5. Verfahren nach einem der Ansprüche 3 bis 4, wobei vor Schritt c) das bewegbare geformte Element (540) mit der Matrize (50") oder mit dem Stempel (50') derart in Eingriff gebracht wird, dass es zumindest teilweise den Haupteindruck (531) bildet.

6. Verfahren nach Anspruch 5, wobei das bewegbare geformte Element (540) mit der Matrize (50") oder mit dem Stempel (50') derart in Eingriff gebracht wird, dass es den Haupteindruck (531) nicht vollständig, d.h. nur teilweise bildet.

7. Verfahren nach einem der Ansprüche 3 bis 6, ferner umfassend die Schritte:
d1) In-Eingriff-Bringen des geformten Elements (540) mit der Matrize (50") oder mit dem Stempel (50') der Form (500), sodass das bewegbare geformte Element (540) einen Abschnitt des Vereinigungseindrucks (511) des Vereinigungshohlraums (510) bildet, wenn die Form zum Formen geschlossen wird.

8. Verfahren nach einem der Ansprüche 3 bis 8, wobei in Schritt e) ein zweiter Hauptkörper in dem Haupthohlraum (530) geformt wird.

9. Form zur Herstellung eines innen hohlen Kunststoffkörpers (1) nach Anspruch 1 oder 2 mit einem inneren Hohlraum bzw. einer inneren Kavität (2) durch Spritzgießen eines Hauptkörpers (4), eines Verschlusskörpers (14) und eines Verbindungselements (20) zwischen dem Hauptkörper und dem Verschlusskörper, umfassend:
- eine Matrize (50"), die einen Hauptmatrizenein- bzw. -abdruck (531), einen Matrizenvereinigungsein- bzw. -abdruck (511) und einen Matrizenverschlussein- bzw. abdruck (521) umfasst;
- einen Stempel (50'), der einen Hauptstempelein- bzw. -abdruck (531'), einen Stempelvereinigungsein- bzw. -abdruck (511') und einen Stempelverschlussein- bzw. -abdruck (521') umfasst;
wobei die Stempeleindrücke (511', 521', 531') und die Matrizeneindrücke (511, 521, 531) angepasst sind, Seite an Seite platziert zu sein, um mehrere Formungshohlräume bzw. -kavitäten (510, 520, 530) zu bilden;
wobei die Form (500) ein bewegbares bzw. bewegliches geformtes Element bzw. Formelement (540) umfasst, das zum Überführen des ersten Hauptkörpers (4) von dem Hauptmatrizen(531)- oder -stempel(531')-Ein- bzw. -Abdruck zu dem Matrizenvereinigungs(511)- oder Stempelvereinigungs(511')-Ein- bzw. -Abdruck bewegbar ist, wobei das bewegbare geformte Element (540) angepasst ist, mit der Matrize (50") oder mit dem Stempel (50') der Form (500) so in Eingriff zu gelangen, dass es zumindest einen Abschnitt des Hauptmatrizeneindrucks (531) oder - stempeleindrucks (531') bildet.

10. Form nach Anspruch 9, wobei das bewegbare geformte Element (540) angepasst ist, mit der Matrize (50") oder mit dem Stempel (50') der Form (500) so in Eingriff zu gelangen, dass es zumindest einen Abschnitt des Matrizenvereinigungseindrucks (511) oder des Stempelvereinigungseindrucks (511') bildet.

11. Form nach Anspruch 9 oder 10, wobei das bewegbare geformte Element (540) einen Vereinigungsabschnitt (541) und einen Hauptabschnitt (542) umfasst, die durch einen Verbindungsabschnitt (543) miteinander verbunden sind, wobei der Vereinigungsabschnitt (541) und der Hauptabschnitt (542) angepasst sind, sowohl mit dem Matrizenvereinigungseindruck (511) als auch mit dem Hauptmatrizeneindruck (531) oder sowohl mit dem Stempelvereinigungseindruck (511') als auch mit dem Hauptstempeleindruck (531') in Eingriff zu gelangen,
und wobei der Vereinigungsabschnitt (541) und der Hauptabschnitt (542) jeweils einen Rahmen (541', 542') umfassen, der ein Gehäuse (541", 542") umgibt, das angepasst ist, den Hauptkörper (4) in seinem Inneren unterzubringen, wobei der Rahmen (541', 542") angepasst ist, mit dem Stempel oder mit der Matrize in Eingriff zu gelangen, um einen Abschnitt des Vereinigungseindrucks (511, 511`) und/oder des Haupteindrucks (531, 531') des Stempels oder der Matrize zu bilden.

12. Form nach einem der Ansprüche 9 bis 11, wobei das bewegbare geformte Element (540) um eine Drehachse (X) parallel zu der Bewegungsrichtung der Matrize und des Stempels während des Schließens/Öffnens der Form drehbar ist, wobei das bewegbare geformte Element (540) auch entlang einer Entnahmerichtung des Hauptkörpers (4) aus der Matrize oder dem Stempel bewegbar ist.

13. Form nach einem der Ansprüche 9 bis 12, wobei der Stempel (50') eine Drehbasis (550) umfasst, die um eine Grunddrehachse (Y) drehbar ist, wobei auf der Drehbasis (550) der Stempelvereinigungseindruck (51 1') und der Stempelverschlusseindruck (521') gestützt bzw. getragen sind oder erhalten werden.

14. Form nach Anspruch 13, wobei die Drehbasis (550) um den Hauptstempeleindruck (531') angeordnet ist.

15. Form nach Anspruch 13, wobei die Drehbasis (550) neben dem Hauptstempeleindruck (531') angeordnet ist, wobei die Grunddrehachse (Y) in Bezug auf eine Mittelachse (Z) der Form (500) beabstandet ist.

## Revendications

1. Corps en plastique creux à l'intérieur (1), ayant une cavité (2), de préférence adaptée pour contenir un matériau liquide, solide ou gazeux, comprenant :
- un corps principal (4) façonné de manière à comprendre des parois latérales (6), ayant une surface interne (8) qui définit au moins partiellement ladite cavité (2) et comprenant une partie de mise en prise (8'), ladite surface interne (8) délimitant une ouverture de mise en prise (12) avec la cavité (2) ;
- un corps de fermeture (14) comprenant des parois de fermeture latérales (16) ayant une surface d'étanchéité interne (18), ledit corps de fermeture (14) fermant au moins partiellement la cavité (2) au niveau de l'ouverture de mise en prise (12) ;
- un élément d'assemblage (20) constitué de plastique, qui relie le corps principal (4) au corps de fermeture (14), ledit élément d'assemblage (20) recouvrant un siège de surmoulage (22) entre le corps principal (4) et le corps de fermeture (14) ;
dans lequel le corps de fermeture (14) a une cavité de mise en prise de moule (30) dans laquelle un moule (500) pour moulage par injection peut être au moins partiellement couplé par couplage de forme, adapté pour contrer la pression générée dans le siège de surmoulage (22) par des moyens d'injection pendant une étape de surmoulage de l'élément d'assemblage (20),
et dans lequel la surface d'étanchéité interne (18) du corps de fermeture (14) est mise en prise au moins partiellement en butée avec la surface interne (8) du corps principal (4) le long de la partie de mise en prise (8') de manière à contrer une contrainte mécanique entre le corps de fermeture (14) et le corps principal (4) le long d'une direction préférentielle (X') et dans la direction d'insertion du corps de fermeture (14) dans la cavité interne (2),
**caractérisé en ce que** l'élément d'assemblage (20) est contenu le long de ses côtés entre les parois latérales (6) du corps principal et les parois de fermeture latérales (16).

2. Corps creux à l'intérieur (1) selon la revendication 1, dans lequel, ayant défini un plan transversal (P) perpendiculaire à la direction préférentielle (X'), ledit élément d'assemblage (20) se trouve en contact avec l'environnement externe uniquement le long d'une surface externe d'élément d'assemblage de celui-ci (201), ladite surface externe (201) ayant au moins un plan tangent virtuel (V) parallèle audit plan transversal (P).

3. Procédé de production d'un corps en plastique creux à l'intérieur (1) selon l'une quelconque des revendications précédentes, par moulage par injection dans un moule (500) comprenant de multiples cavités (510, 520, 530), chacune desdites multiples cavités (510, 520, 530) étant formée en rapprochant des empreintes de matrice (511, 521, 531) respectives et des empreintes de poinçon (511', 521', 531') respectives formées sur la matrice (50") et sur le poinçon (50'), respectivement, du moule (500), le procédé comprenant les étapes suivantes :
a) le moulage d'un premier corps principal (4) dans une cavité principale (530) desdites multiples cavités (510, 520, 530) et d'un premier corps de fermeture (14) dans une cavité de fermeture (520) desdites multiples cavités (510, 520, 530) ;
b) l'ouverture du moule (500) ;
c) le transfert du premier corps principal (4) depuis une empreinte principale (531, 531') desdites empreintes de matrice (511, 521, 531) ou de poinçon (511', 521', 531') vers une empreinte d'union (511, 511') desdites empreintes de matrice ou de poinçon en déplaçant un élément façonné pour être mobile (540) qui porte le premier corps principal (4) ;
d) la mise en prise de l'élément façonné pour être mobile (540) avec la matrice (50") ou avec le poinçon (50') du moule (500) de sorte que ledit élément façonné pour être mobile (540) forme une partie de l'empreinte principale (531, 531') de la cavité principale (530) lorsque le moule est fermé pour le moulage ;
e) le moulage d'un deuxième corps de fermeture (14') dans la cavité de fermeture (520) et, tout en gardant le moule fermé, dans la cavité d'union (510) desdites multiples cavités (510, 520), le surmoulage par injection d'un élément d'assemblage (20) entre le corps principal (4) et le corps de fermeture (14) le long d'un siège de surmoulage (22).

4. Procédé selon la revendication 3, dans lequel le mouvement de l'élément façonné pour être mobile (540) comprend l'étape de mise en rotation de l'élément façonné pour être mobile (540) autour d'un axe de rotation (X) et le déplacement en translation de l'élément façonné pour être mobile (540) le long d'une direction d'extraction du corps principal (4) de la matrice (50") ou du poinçon (50').

5. Procédé selon l'une quelconque des revendications 3 à 4, dans lequel, avant l'étape c), l'élément façonné pour être mobile (540) est mis en prise avec la matrice (50") ou avec le poinçon (50') de manière à former au moins partiellement l'empreinte principale (531).

6. Procédé selon la revendication 5, dans lequel l'élément façonné pour être mobile (540) est mis en prise avec la matrice (50") ou avec le poinçon (50') de manière à ne pas former totalement l'empreinte principale (531), à savoir à la former seulement partiellement.

7. Procédé selon l'une quelconque des revendications 3 à 6, comprenant en outre l'étape suivante :
d1) la mise en prise de l'élément façonné (540) avec la matrice (50") ou avec le poinçon (50') du moule (500) de sorte que ledit élément façonné pour être mobile (540) forme une partie de l'empreinte d'union (511) de la cavité d'union (510) lorsque le moule est fermé pour le moulage.

8. Procédé selon l'une quelconque des revendications 3 à 8, dans lequel, dans l'étape e), un deuxième corps principal est moulé dans la cavité principale (530).

9. Moule pour la production d'un corps en plastique creux à l'intérieur (1) selon la revendication 1 ou 2, ayant une cavité interne (2), par moulage par injection d'un corps principal (4), d'un corps de fermeture (14) et d'un élément d'assemblage (20) entre le corps principal et le corps de fermeture, comprenant :
- une matrice (50") comprenant une empreinte de matrice principale (531), une empreinte d'union de matrice (511) et une empreinte de fermeture de matrice (521) ;
- un poinçon (50') comprenant une empreinte de poinçon principale (531'), une empreinte d'union de poinçon (511') et une empreinte de fermeture de poinçon (521') ;
lesdites empreintes de poinçon (511', 521', 531') et empreintes de matrice (511, 521, 531) étant adaptées pour être placées côte à côte pour former de multiples cavités de moulage (510, 520, 530) ;
ledit moule (500) comprenant un élément façonné pour être mobile (540) pouvant être déplacé pour transférer le premier corps principal (4) de l'empreinte de matrice (531) ou de poinçon (531') principale vers l'empreinte d'union de matrice (511) ou d'union de poinçon (511'), ledit élément façonné pour être mobile (540) étant adapté pour venir en prise avec la matrice (50") ou avec le poinçon (50') du moule (500) de façon à former au moins une partie de l'empreinte de matrice (531) ou de poinçon (531') principale.

10. Moule selon la revendication 9, dans lequel l'élément façonné pour être mobile (540) est adapté pour venir en prise avec la matrice (50") ou avec le poinçon (50') du moule (500) de façon à former au moins une partie de l'empreinte d'union de matrice (511) ou de l'empreinte d'union de poinçon (511').

11. Moule selon la revendication 9 ou 10, dans lequel l'élément façonné pour être mobile (540) comprend une partie d'union (541) et une partie principale (542) reliées entre elles par une partie de raccordement (543), dans lequel la partie d'union (541) et la partie principale (542) sont adaptées pour venir en prise à la fois avec l'empreinte d'union de matrice (511) et l'empreinte de matrice principale (531) ou à la fois avec l'empreinte d'union de poinçon (511') et l'empreinte de poinçon principale (531'),
et dans lequel la partie d'union (541) et la partie principale (542) comprennent chacune un cadre (541', 542') qui entoure un logement (541", 542") adapté pour loger le corps principal (4) à l'intérieur de celui-ci, ledit cadre (541', 542") étant adapté pour venir en prise avec le poinçon ou avec la matrice pour former une partie de l'empreinte d'union (511, 511') et/ou de l'empreinte principale (531, 531') de poinçon ou de matrice.

12. Moule selon l'une quelconque des revendications 9 à 11, dans lequel l'élément façonné pour être mobile (540) peut tourner autour d'un axe de rotation (X) parallèle à la direction de mouvement de la matrice et du poinçon pendant la fermeture / l'ouverture du moule, ledit élément façonné pour être mobile (540) étant également mobile le long d'une direction d'extraction du corps principal (4) de la matrice ou du poinçon.

13. Moule selon l'une quelconque des revendications 9 à 12, dans lequel le poinçon (50') comprend une base rotative (550) pouvant tourner autour d'un axe de rotation de base (Y), l'empreinte d'union de poinçon (511') et l'empreinte de fermeture de poinçon (521') étant supportées sur ladite base rotative (550) ou obtenues sur celle-ci.

14. Moule selon la revendication 13, dans lequel la base rotative (550) est agencée autour de l'empreinte de poinçon principale (531').

15. Moule selon la revendication 13, dans lequel la base rotative (550) est agencée à côté de l'empreinte de poinçon principale (531'), l'axe de rotation de base (Y) étant espacé par rapport à un axe central (Z) du moule (500).
